# EUROPEAN PATENT SPECIFICATION

(11) **EP 3 071 673 B1**
(45) Date of publication and mention of the grant of the patent: **17.07.2019**
(21) Application number: 14798751.5
(22) Date of filing: 06.11.2014
(51) Int. Cl.: C10G 45/48, C10G 45/50, C10G 45/08, C10G 2/00, C10G 65/08

(54) **USE OF A LOW-SULPHUR BLENDED FEED IN A PROCESS FOR THE PRODUCTION OF HYDROCARBON FLUIDS HAVING A LOW AROMATIC AND SULFUR CONTENT**
VERWENDUNG EINES GEMISCHTEN AUSGANGSSTOFFES MIT GERINGEM SCHWEFELGEHALT IN EINEM VERFAHREN ZUR HERSTELLUNG VON KOHLENWASSERSTOFFFLÜSSIGKEITEN MIT GERINGEM AROMATEN- UND SCHWEFELGEHALT
UTILISATION D'UNE CHARGE MÉLANGÉE À BASSE TENEUR EN SOUFRE DANS UN PROCÉDÉ DE PRODUCTION DE FLUIDES HYDROCARBONÉS AYANT UNE BASSE TENEUR EN COMPOSÉS AROMATIQUES ET EN SOUFRE

(30) Priority: 18.11.2013 FR 1361250
(43) Date of publication of application: 28.09.2016
(73) Proprietor: Total Marketing Services, 92800 Puteaux (FR)
(72) Inventor: DUPUY, Carole, 92130 Issy-les-Moulineaux (FR)
(74) Representative: Hirsch & Associés
(86) International application number: PCT/EP2014/073894
(87) International publication number: WO 2015/071160

(56) References cited:
- WO-A1-2011/061575
- WO-A1-2011/061576
- WO-A1-2012/136806
- GB-A- 2 396 622
- US-A1- 2002 193 646

## Description

### FIELD OF THE INVENTION

The invention relates to the production of hydrocarbon fluids, called hereinafter specific fluids, having a narrow boiling range and having a very low aromatic content and their uses. The invention relates to hydrogenation conditions of Gas to Liquid (GTL)-derived feedstock in blend for the production of the specific fluids.

### BACKGROUND ART

Hydrocarbon fluids find widespread use as solvents such as in adhesives, cleaning fluids, explosives solvents, for decorative coatings and printing inks, light oils for use in applications such as metal extraction, metalworking or demoulding and industrial lubricants, and drilling fluids. The hydrocarbon fluids can also be used as extender oils in adhesives and sealant systems such as silicone sealants and as viscosity depressants in plasticised polyvinyl chloride formulations and as carrier in polymer formulation used as flocculants for example in water treatment, mining operations or paper manufacturing and also used as thickener for printing pastes. Hydrocarbon fluids may also be used as solvents in a wide variety of other applications such as chemical reactions.

The chemical nature and composition of hydrocarbon fluids varies considerably according to the use to which the fluid is to be put. Important properties of hydrocarbon fluids are the distillation range generally determined by ASTM D-86 or the ASTM D-1160 vacuum distillation technique used for heavier materials, flash point, density, aniline point as determined by ASTM D-611, aromatic content, sulphur content, viscosity, colour and refractive index. Fluids can be classified as paraffinic, isoparaffinic, dearomatised, naphthenic, non-dearomatised and aromatic.

These fluids tend to have narrow boiling point ranges as indicated by a narrow range between Initial Boiling Point (IBP) and Final Boiling Point (FBP) according to ASTM D-86. The Initial Boiling Point and the Final Boiling Point will be chosen according to the use to which the fluid is to be put. However, the use of the narrow cuts provides the benefit of a narrow flash point which is important for safety reasons. The narrow cut also brings important fluid properties such as a better defined aniline point or solvency power, then viscosity, and defined evaporation conditions for systems where drying is important, and finally better defined surface tension.

To produce these specific fluids, the preferred feedstocks are specific gasoil cuts, such as low sulphur feed. A typical feed could be hydrocraked vacuum gasoil (VGO) for example.

Classical feeds produced in refineries cannot be used because of their high sulphur and aromatic contents. They are too heavy, besides their relative high density is commercially unfavourable. Moreover, sulphur is a poison for the dearomatisation catalyst and aromatics compounds have to be hydrogenated in order to obtain high purity products. If the initial aromatic content of the feed is too high or if the molecules are resistant, the dearomatisation step will be difficult to conduct and the final products will have non-relevant technical specifications. It is thus impossible to use a classical gasoil feed produced in refineries although it is broadly available in comparison with specific gas oils.

US 2002/193646 A1 discloses a method of inhibiting oxidation of a Fischer Tropsch product comprising blending said product with a petroleum-derived hydrocarbon.

One aim of the invention is to provide a process for preparing specific fluids, which process does not require using hydrocracked vacuum gasoil (HCVGO) as a feed. Another aim of the invention is to provide a process which uses a lower amount of hydrocracked vacuum gasoil in the feed.

Another aim of the invention is to find a hydrogenation process with improved efficiency. Improved efficiency means that for a given content of aromatics in the feedstock, the content of aromatics in the hydrogenated product is lower than that obtained in the hydrogenated products produced by the hydrogenation processes of the prior art. In particular, the aim of the invention is to find a process exhibiting an improved efficiency with respect to the reduction of the monoaromatics content.

Another aim of the invention is to find a hydrogenation process, in which the hydrogenation catalyst is less sensitive to deactivation.

### SUMMARY OF THE INVENTION

The invention relates to the use of a low-sulphur blended feed in a hydrogenation process for reducing the hydrogenation catalyst sensitivity to deactivation according to claim 1.

Surprisingly the applicant has found that classical gasoil feeds produced in refineries can be processed and used to produce special fluids by blending them with hydrocarbon cuts originating from a gas-to-liquid process.

The Applicant has also surprisingly found that when the blended feed is used in the hydrogenation process, then the aromatics content in the hydrogenated hydrocarbon fluid, especially the monoaromatics content, is lower than that which is obtained when the feed is devoid of a hydrocarbon cut originating from a gas-to-liquid process ; the aromatics content in the blended feed before hydrogenation being the same as that of the feed devoid of a hydrocarbon cut originating from a gas-to-liquid process. Using the blended feed according to the invention allows reducing the aromatics content in the hydrogenated hydrocarbon fluid.

Further, the Applicant has found that using the blended feed in the hydrogenation process allows reducing the catalyst sensitivity to deactivation.

According to one embodiment, the low sulphur blended feed contains 5 to 95 % wt. of a hydrocarbon cut originating from a gas-to-liquid process, preferably 20 to 80 % wt. and more preferably 40 to 60 % wt.

According to one embodiment, the low-sulphur blended feed contains less than 70% aromatics, preferably less than 50% and more preferably less than 30%.

According to one embodiment, the low-sulphur blended feed contains less than 15ppm sulphur, preferably less than 8ppm and more preferably less than 5ppm.

According to one embodiment, the very low sulphur and very low aromatic hydrocarbon fluids have a boiling point in the range 150 to 400°C, preferably from 200 to 400°C.

According to one embodiment, the very low sulphur and very low aromatic hydrocarbon fluids have a boiling range below 80 °C and preferably between 40 and 50°C.

According to one embodiment, the very low sulphur and very low aromatic hydrocarbon fluids contain less than 300ppm aromatics, preferably less than 100ppm, and more preferably less than 50ppm.

According to one embodiment, the very low sulphur and very low aromatic hydrocarbon fluids have a sulphur content of less than 5ppm, preferably less than 3ppm, most preferably less than 0.5ppm.

According to one embodiment, the process comprises three hydrogenation stages, preferably in three separate reactors.

According to one embodiment, the process comprises a step of prefractionation of the low-sulphur blended feed prior to hydrogenation, into fractions having a boiling point in the range of 150 to 250°C or in the range of 220 to 330°C.

According to one embodiment, the process further comprises a step of fractionation of the very low sulphur and very low aromatic hydrocarbon fluids into fluids of defined boiling ranges.

According to one embodiment, the very low sulphur and very low aromatic hydrocarbon fluids produced have:
- a naphthenic content below 60%wt, especially below 50% and even below 40%, and/or
- a polynaphthenic content below 30%wt, especially below 25% and even below 20%, and/or
- a paraffinic content above 40%wt, especially above 60% and even above 70%, and/or
- an isoparaffinic content above 20%wt, especially above 30%, and even above 40%.

These contents are those of the very low sulphur and very low aromatic hydrocarbon fluids after hydrogenation and before fractionation into fluids of defined boiling ranges.

Outside of the scope of the invention are described new hydrocarbon fluids obtainable by the process of the invention.

Outside of the scope of the invention is described the use of the hydrocarbon fluids as drilling fluids, as industrial solvents, in coating fluids, in metal extraction, in mining, in explosives, in concrete demoulding formulations, in adhesives, in printing inks, in metal working fluids, as cutting fluids, as rolling oils, as electric discharge machining (EDM) fluids, rust preventive in industrial lubricants, as extender oils, in sealants or polymers formulation with silicone, as viscosity depressants in plasticized polyvinyl chloride formulations, in resins, as crop protection fluids, in pharmaceutical products, in paint compositions, in polymers used in water treatment, paper manufacturing or printing pastes and cleaning solvents.

### DESCRIPTION OF THE FIGURE

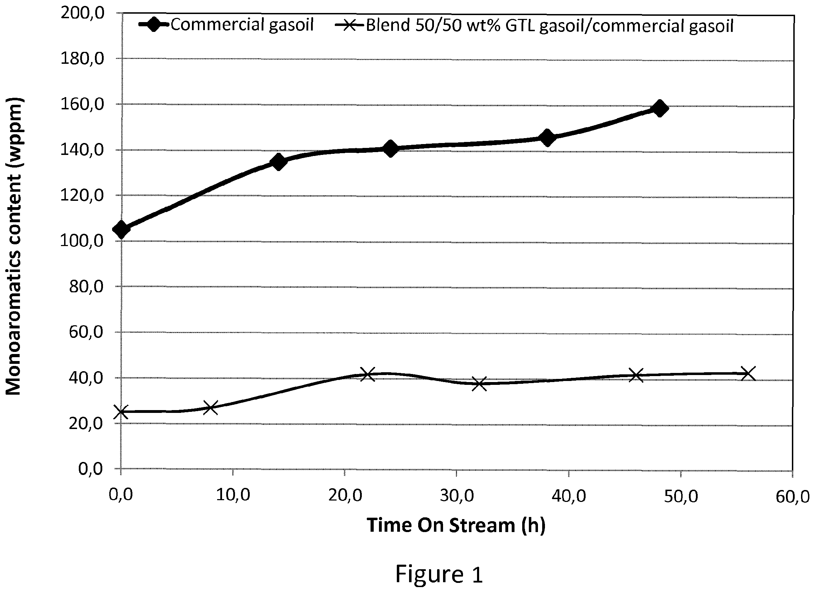

Figure 1 represents the variation of the monoaromatics content in weight ppm as a function of the time for two feeds. One feed is a commercial ultra-low sulphur diesel. The other is a blend of 50/50 by weight of a gas-to-liquid gasoil (GTL) and the commercial ultra-low sulphur diesel used in the first feed.

### DESCRIPTION OF EMBODIMENTS OF THE INVENTION

To produce the specific fluids by the hydrogenation process according to the invention, the feedstock comprises a mixture of:
i) a hydrocarbon cut originating from a gas-to-liquid process in blend with
ii) at least one selected from the group consisting of : a hydrodeoxygenated hydrocarbon cut obtained from the biomass, a gas condensate, a hydrocarbon cut of fossil origin and mixtures thereof.

In one embodiment, the feedstock consists only of a mixture of:
i) a hydrocarbon cut originating from a gas-to-liquid process in blend with
ii) at least one selected from the group consisting of : a hydrodeoxygenated hydrocarbon cut obtained from the biomass, a gas condensate, a hydrocarbon cut of fossil origin and mixtures thereof.

### i) Hydrocarbon cut originating from a gas-to-liquid process:

A Gas to liquids (GTL) process is a refinery process that converts natural gas or other gaseous hydrocarbons into longer-chain hydrocarbons such as gasoline or diesel fuel. Methane-rich gases are converted into liquid synthetic fuels either via direct conversion or via syngas as an intermediate, for example using the Fischer Tropsch process, Methanol to Gasoline process (MTG) or Syngas to gasoline plus process (STG+). For the Fischer Tropsch process, the effluents produced are Fischer-Tropsch derived.

By "Fischer-Tropsch derived" is meant that a hydrocarbon composition is, or derives from, a synthesis product of a Fischer-Tropsch condensation process. The Fischer-Tropsch reaction converts carbon monoxide and hydrogen into longer chain, usually paraffinic hydrocarbons:

n(CO + 2H₂) = (-CH₂-)n + nH₂O + heat,

in the presence of an appropriate catalyst and typically at elevated temperatures (e.g., 125 to 300°C , preferably 175 to 250°C) and/or pressures (e.g., 5 to 100 bars, preferably 12 to 50 bars). Hydrogen: carbon monoxide ratios other than 2:1 may be employed if desired. The carbon monoxide and hydrogen may themselves be derived from organic or inorganic, natural or synthetic sources, typically either from natural gas or from organically derived methane. For examples it can also be derived from biomass or from coal.

The collected hydrocarbon composition containing a continuous iso-paraffinic series as described above may preferably be obtained by hydroisomerisation of a paraffinic wax, preferably followed by dewaxing, such as solvent or catalytic dewaxing. The paraffinic wax is preferably a Fischer-Tropsch derived wax.

Hydrocarbon cuts may be obtained directly from the Fischer-Tropsch reaction, or indirectly for instance by fractionation of Fischer-Tropsch synthesis products or preferably from hydrotreated Fischer-Tropsch synthesis products.

Hydrotreatment preferably involves hydrocracking to adjust the boiling range (see, e.g., GB-B-2077289 and EP-A-0147873) and/or hydroisomerisation, which can improve cold flow properties by increasing the proportion of branched paraffins. EP-A-0583836 describes a two-step hydrotreatment process in which a Fischer-Tropsch synthesis product is firstly subjected to hydroconversion under conditions such that it undergoes substantially no isomerisation or hydrocracking (this hydrogenates the olefinic and oxygen-containing components), and then at least part of the resultant product is hydroconverted under conditions such that hydrocracking and isomerisation occur to yield a substantially paraffinic hydrocarbon fuel. The desired gas oil fraction(s) may subsequently be isolated for instance by distillation.

Other post-synthesis treatments, such as polymerisation, alkylation, distillation, cracking-decarboxylation, isomerisation and hydroreforming, may be employed to modify the properties of Fischer-Tropsch condensation products, as described for instance in US-A-4125566 and US-A-4478955. Examples of Fischer-Tropsch processes which for example can be used to prepare the above-described Fischer-Tropsch derived collected hydrocarbon composition are the so-called commercial Slurry Phase Distillate technology of Sasol, the Shell Middle Distillate Synthesis Process and the "AGC-21" Exxon Mobil process. These and other processes are for example described in more details in EP-A-776959, EP-A-668342, US-A-4943672, US-A-5059299, WO-A-9934917 and WO-A-9920720.

Typically, the gas to liquid feedstock shall contain less than 1 ppm sulphur as measured according to ASTM method D5453, less than 1 wt. % aromatics as measured according to method IP391, and have a density lower or equal to 0.800 g/cm³ as measured according to method ASTMD4052.

### ii) hydrocarbon cuts of fossil origin, gas condensates, hydrodeoxygenated hydrocarbon cuts from the biomass:

a) According to the invention, solvent from biological origin used as feedstock in mixture can be produced from biological raw materials from the group consisting of vegetable oils, animal fats, fish oils, and mixtures thereof. Suitable biological raw materials include rapeseed oil, canola oil, colza oil, tall oil, sunflower oil, soybean oil, hemp oil, olive oil, linenseed oil, mustard oil, palm oil, arachis oil, castor oil, coconut oil, animal fats such as suet, tallow, blubber, recycled alimentary fats, starting materials produced by genetic engineering, and biological starting materials produced by microbes such as algae and bacteria. Condensation products, esters, or other derivatives obtained from biological raw materials may also be used as starting materials.
   The solvent from biological origin is then produced by using for instance a process first comprising a hydrodeoxygenation (HDO) step for decomposing the structure of the biological ester or triglyceride constituent, and for removing oxygen, phosphorus and sulfur compounds, concurrently hydrogenating the olefinic bonds, followed by isomerization of the product thus obtained, thus branching the hydrocarbon chain and improving the low temperature properties of the paraffin. The product may for instance fractionate to give the desired fractions.
b) According to the invention typical refinery feeds can be of any type including feedstock from distillate hydrocracker unit, but also feedstock having high aromatic contents, such as standard ultra-low sulphur Diesel feedstock, heavy Diesel or jet type. The standard ultra-low sulphur Diesel contains less than 10 ppm sulphur as measured according to EN ISO 20846, has a density comprised between 0.820 and 0.845 g/cm³ as measured according to method EN ISO 12185, and generally meets the requirements of EuroV Diesel as defined in European Directive 2009/30/EC. It is generally obtained by a severe hydrodesulphurization of straight run gasoil cuts from atmospheric distillation.
   Typical refinery feeds can also be hydrocracked to obtain shorter and simple molecules by the addition of hydrogen under high pressure in the presence of a catalyst. Descriptions of hydrocracking processes may be found in Hydrocarbon Processing of November 1996 pages 124 to 128, hydrocracking science and technology, 1996, US4347124, US4447315, WO-A-99/47626
   The optionally hydrocracked feed is then blended with the hydrocarbon cut originating from of a gas-to-liquid process and/or gas condensates and/or hydrodeoxygenated hydrocarbon cuts from the biomass in a proportion of 5 to 95 wt. % of GTL hydrocarbon cuts with respect to the weight of the feed, preferably 20 to 80 wt. % and more preferably 40 to 60 wt. %.
   Actually, the proportion of GTL hydrocarbon cut can be adapted so as to target a final density of about 0.800 to 0.820 g/cm³ which is commercially favourable.
c) gas condensates :
   Gas Condensates derive from natural gas. They are a mixture of liquid hydrocarbons with more than four carbon atoms per molecule. Under natural conditions, a gas condensate is a solution of heavier hydrocarbons. The gas condensate separated from natural gas at reduced pressure and/or temperature by reverse condensation is a colorless or slightly colored liquid of density 700-800 kg/m³, which begins to boil at 30-70°C. The composition of a gas condensate corresponds approximately to the gasoline or kerosene fraction of crude oil or to a mixture of them.

Ideally, according to the invention, blends of such feedstock, here the blended feeds, shall contain less than 15 ppm of sulphur, preferably less than 8ppm and more preferably less than 5ppm as measured according to EN ISO 20846, less than 70% wt. aromatics, preferably less than 50% wt. and more preferably less than 30% wt. as measured according to method IP391 or EN12916, and have a density inferior to 0.830 g/cm³ as measured according to method EN ISO 12185.

Before entering the hydrogenation unit, a pre-fractionation step can take place in the case where a gasoil cut feed is used. Having a more narrow boiling range entering the unit allows having a more narrow boiling range at the outlet. Indeed typical boiling ranges of pre-fractionated cuts are 150°C to 250°C or 220 to 330°C while cuts without a pre-fractionating step typically have a boiling range from 150°C to 360°C.

The optionally pre-fractionated low sulfur blended feeds are then hydrogenated. Hydrogen that is used in the hydrogenation unit is typically a high purity hydrogen, e.g. with a purity of more than 99%, albeit other grades can be used.

Hydrogenation takes place in one or more reactors. The reactor can comprise one or more catalytic beds. Catalytic beds are usually fixed beds.

Hydrogenation takes place using a catalyst. Typical hydrogenation catalysts include but are not limited to: nickel, platinum, palladium, rhenium, rhodium, nickel tungstate, nickel molybdenum, molybdenum, cobalt molybdenate, nickel molybdenate on silica and/or alumina carriers or zeolites. A preferred catalyst is Ni-based and is supported on an alumina carrier, having a specific surface area varying between 100 and 200 m²/g of catalyst.
The hydrogenation conditions are typically the following:
- Pressure: 50 to 160 bars, preferably 100 to 150 bars, and most preferably 115 to 140 bars;
- Temperature: 80 to 180°C, preferably 120 to 160°C and most preferably 130 to 150°C;
- Liquid hourly space velocity (LHSV) : 0,2 to 5 hr⁻¹, preferably 0.5 to 3, and most preferably 0.8 to 1.5;
- Hydrogen treat rate: 100 to 300 Nm³/ton of feed, preferably 150 to 250 and most preferably 160 to 200.

The hydrogenated products produced according to the invention have a naphthenic content below 60%wt, especially, below 50% and even below 40%, a polynaphthenic content below 30%wt, especially below 25% and even below 20%, a paraffinic content above 40%wt, especially above 60% and even above 70%, and/or an isoparaffinic content above 20%wt, especially above 30%, and even above 40%. These contents are those of the very low sulphur and very low aromatic hydrocarbon fluids after hydrogenation and before fractionation into fluids of defined boiling ranges.

Substantially no hydrodesulphurisation takes place: the sulphur compounds are rather trapped into or onto the catalyst rather than being discharged as H₂S in the prior art process. In the conditions, the final product, even with high boiling ranges, typically above 300°C or even above 320°C, still contains very low aromatics content, typically less than 100 ppm.

The process of the invention can be carried out in several stages. There can be two or three stages, preferably three stages, preferably in three separate reactors. The first stage will operate the sulphur trapping, hydrogenation of substantially all unsaturated compounds, and up to about 90% of hydrogenation of aromatics. The flow exiting from the first reactor contains substantially no sulphur. In the second stage the hydrogenation of the aromatics continues, and up to 99% of aromatics are hydrogenated. The third stage is a finishing stage, allowing an aromatic content as low as 300ppm or even less such as below 100ppm or even below 50ppm, even for high boiling products.

The catalysts can be present in varying or substantially equal amounts in each reactor, e.g. for three reactors according to weight amounts of 0.05-0.5/0.10-0.70/0.25-0.85, preferably 0.07-0.25/0.15-0.35/0.4-0.78 and most preferably 0.10-0.20/0.20-0.32/0.48-0.70.

It is also possible to have two hydrogenation reactors instead of three.

It is also possible that the first reactor be made of twin reactors operated alternatively in a swing mode. This may be useful for catalyst charging and discharging: since the first reactor comprises the catalyst that is poisoned first (substantially all the sulphur is trapped in and/or on the catalyst) it should be changed often.
One reactor can be used, in which two, three or more catalytic beds are installed.
It may be necessary to insert quenches on the recycle to cool effluents between the reactors or catalytic beds to control reaction temperatures and consequently hydrothermal equilibrium of the hydrogenation reaction. In a preferred embodiment, there is no such intermediate cooling or quenching.

In case the process makes use of 2 or 3 reactors, the first reactor will act as a sulphur trap, especially for benzo and di benzothiophens and their derivatives considered as the most refractory sulphur compounds present in refined gasoil cuts. This first reactor will thus trap substantially all the sulphur. The catalyst will thus be saturated very quickly and may be renewed from time to time. When regeneration or rejuvenation is not possible for such saturated catalyst the first reactor is considered as a sacrificial reactor which size and catalyst content both depend on the catalyst renewal frequency.

In an embodiment the resulting product and/or separated gas is/are at least partly recycled to the inlet of the hydrogenation stages. This dilution helps maintaining the exothermicity of the reaction within controlled limits, especially at the first stage. Recycling also allows heat-exchange before the reaction and also a better control of the temperature. The stream exiting the hydrogenation unit contains the hydrogenated product and hydrogen. Flash separators are used to separate effluents into gas, mainly remaining hydrogen, and liquids, mainly hydrogenated hydrocarbons. The process can be carried out using three flash separators, one of high pressure, one of medium pressure, and one of low pressure, very close to atmospheric pressure.

The hydrogen gas that is collected on top of the flash separators can be recycled to the inlet of the hydrogenation unit or at different levels in the hydrogenation units between the reactors.

Because the final separated product is at about atmospheric pressure, it is possible to feed directly the fractionation stage, which is preferably carried out under vacuum pressure that is at about between 10 to 50 mbars, preferably about 30 mbars.

The fractionation stage can be operated such that various hydrocarbon fluids can be withdrawn simultaneously from the fractionation column, and the boiling range of which can be predetermined.

The hydrogenation reactors, the separators and the fractionation unit can thus be connected directly, without having to use intermediate tanks, as is usually the case in the prior art documents. By adapting the feed, especially the initial and final boiling points of the feed, it is possible to produce directly, without intermediate storage tanks, the final products with the desired initial and final boiling points. Moreover, this integration of hydrogenation and fractionation allows an optimized thermal integration with reduced number of equipment and energy savings.

The temperature in the reactors is typically about 150-160°C and the pressure is typically about 140 bars while the liquid hourly space velocity is typically about 0.8 and the treat rate is typically about 100 to 180 Nm³/ton of feed, depending on the feed quality.

The fluids produced according to the process of the invention possess outstanding properties, in terms of aniline point or solvency power, molecular weight, vapour pressure, viscosity, defined evaporation conditions for systems where drying is important, and defined surface tension.

The fluids produced according to the process of the invention have a boiling range from 100 to 400°C and also exhibit an enhanced safety, due to the very low aromatics content, typically less than 300ppm, more preferably less than 100ppm, and even more preferably less than 50ppm. This makes them suitable for use in crop protection fluids as well as in pharmacological products. This is especially useful for high temperature boiling products, typically products boiling in the range 300-400°C, preferably 320-380°C.

The boiling range of the final product is preferably not more than 80 °C, preferably not more than 65°C, more preferably not more than 50°C.

The fluids prepared according to the process of the present invention also have an extremely low sulphur content, typically less than 5ppm, even less than 3ppm and preferably less than 0.5ppm, at a level too low to be detected by the usual low-sulphur analyzers.

The fluids produced by the process of the present invention have a variety of uses for example in drilling fluids, in hydraulic fracturing, in mining, in water treatments, in industrial solvents, in paints composition, in explosives, in printing inks, in oil dispersants, in food processing industry and in metal working fluids, such as cutting fluids, electric discharge machining (EDM) fluids, rust preventives, coating fluids and aluminium rolling oils, and in concrete demoulding formulations. They can also be used in industrial lubricants such as shock absorbers, insulation oils, hydraulic oils, gear oils, turbine oils, textile oils and in transmission fluids such as automatic transmission fluids or manual gear box formulations.

In all this foreseen uses, the Initial Boiling Point (IBP) to Final Boiling Point (FBP) range is selected according to the particular use and composition. The fluids are also useful as components in adhesives, sealants or polymer systems such as silicone sealant, modified silane polymers where they act as extender oils and as viscosity depressants for polyvinyl chloride (PVC) pastes or Plastisol formulations.

The fluids produced according to the process of the present invention may also be used as new and improved solvents, particularly as solvents for resins. The solvent-resin composition may comprise a resin component dissolved in the fluid, the fluid comprising 5 to 95% by total volume of the composition.

The fluids produced according to the process of the present invention may be used in place of solvents currently used for inks, coatings and the like.

The fluids produced according to the process of the present invention may also be used to dissolve resins such as: acrylic-thermoplastic, acrylic-thermosetting, chlorinated rubber, epoxy (either one or two part), hydrocarbon (e.g., olefins, terpene resins, rosin esters, petroleum resins, coumarone-indene, styrene-butadiene, styrene, methyl-styrene, vinyl-toluene, polychloroprene, polyamide, polyvinyl chloride and isobutylene), phenolic, polyester and alkyd, polyurethane and modified polyurethane, silicone and modified silicone (MS polymers), urea, and, vinyl polymers and polyvinyl acetate.

Examples of the type of specific applications for which the fluids and fluid-resin blends may be used include coatings, cleaning compositions and inks. For coatings the blend preferably has high resin content, i.e., a resin content of 20% to 80% by volume. For inks, the blend preferably contains a lower concentration of the resin, i.e., 5%-30% by volume.

In yet another embodiment, various pigments or additives may be added.

The fluids produced by the process of the present invention can be used as cleaning compositions for the removal of hydrocarbons

The fluids may also be used in cleaning compositions such as for use in removing ink, more specifically in removing ink from printing.

In the offset printing industry it is important that ink can be removed quickly and thoroughly from the printing surface without harming the metal or rubber components of the printing machine. Further there is a tendency to require that the cleaning compositions are environmentally friendly in that they contain no or hardly any aromatic volatile organic compounds and/or halogen containing compounds. A further trend is that the compositions fulfil strict safety regulations. In order to fulfil the safety regulations, it is preferred that the compositions have a flash point of more than 62°C, more preferably a flash point of 90°C or more. This makes them very safe for transportation, storage and use. The fluids produced according to the process of the present invention have been found to give a good performance in that ink is readily removed while these requirements are met.

The fluids produced according to the process of the invention are also useful as drilling fluids, such as a drilling fluid which has the fluid prepared by the process of this invention as a continuous oil phase. The fluid may also be used as a penetration rate enhancer comprising a continuous aqueous phase containing the fluid produced according to the process of the invention dispersed therein.

Fluids used for offshore or on-shore applications need to exhibit acceptable biodegradability, human, eco-toxicity, eco-accumulation and lack of visual sheen credentials for them to be considered as candidate fluids for the manufacturer of drilling fluids. In addition, fluids used in drilling uses need to possess acceptable physical attributes. These generally include a viscosity of less than 4.0 mm²/s at 40°C, a flash value of less than 100°C and, for cold weather applications, a pour point at -40°C or lower. These properties have typically been only attainable through the use of expensive synthetic fluids such as hydrogenated polyalphaolefins, as well as unsaturated internal olefins and linear alphaolefins and esters. The properties can however be obtained in some fluids produced according to the process of the present invention

Drilling fluids may be classified as either water-based or oil-based, depending upon whether the continuous phase of the fluid is mainly oil or mainly water. Water-based fluids may however contain oil and oil-based fluids may contain water and the fluids produced according to the process of the invention are particularly useful as the oil phase.

Typically preferred ASTM D-86 boiling ranges for the uses of the fluids are that of printing ink solvents (sometimes known as distillates) have boiling ranges in the ranges of 235°C to 265°C, 260°C to 290°C, 280°C to 315°C and 300°C to 355°C. Fluids preferred for use as drilling fluids have boiling ranges in the ranges of 195°C to 240°C, 235°C to 265°C and 260°C to 290°C. Fluids preferred for explosives, concrete demoulding, industrial lubricants, transmission fluids and metal working fluids have boiling ranges in the ranges of 185°C to 215°C, 195°C to 240°C, 235°C to 365°C, 260°C to 290°C, 280°C to 325°C and 300°C to 360°C. Fluids preferred as extenders for sealants have boiling ranges in the ranges of 195°C to 240°C, 235°C to 265°C, 260°C to 290°C, 280°C to 325°C or 300°C to 360°C. Fluids preferred as viscosity depressants for polyvinyl chloride plastisols have boiling ranges in the ranges of 185°C to 215°C, 195°C to 240°C, 235°C to 265°C, 260°C to 290°C, 280°C to 315°C and 300°C to 360°C.

Fluids preferred as carrier for polymeric composition used in water treatment, mining operation or printing pastes have boiling ranges in the ranges of 185°C to 215°C, 195°C to 240°C, 235°C to 265°C, 260°C to 290°C, 280°C to 315°C and 300°C to 360°C.

Fluids preferred for crop protection application have boiling ranges in the range of 300 and 370°C, such fluids being used in combination with hydrocarbon fluids such as isodewaxed hydrocarbons or any hydrocarbons having comparable properties such as viscosity.

For pharmacological application, suitable fluids are those having boiling ranges in the ranges of 275°C to 330°C, 290°C to 380°C and 300 to 370°C.

For paint compositions and cleaning applications, the most preferred boiling ranges are in the ranges of 140 to 210°C, and 180 to 220°C. Fluids showing an initial boiling point above 250°C and a final boiling point close to 330°C or preferably close to 290°C will be preferred for low VOC coatings formulations.

### EXAMPLE

The following example illustrates the invention without limiting it.

### Example 1

The aim of the present example is to describe the preparation of hydrocarbon fluids according to the process of the present invention.
In the present invention, a commercial ultra-low sulphur Diesel (commercial ULSD having a sulphur content of 8 ppm, a density of 0.845 g/cm³, an aromatics content of 28 wt. % and a mono aromatics content of 22.7 wt. % is blended with a gasoil cut originating from a gas-to-liquid process (GTL gasoil), having a sulphur content inferior to 1 ppm, a density of 0.768 g/cm³, an aromatics content inferior to 1wt. %, and a mono aromatics content of 563 ppm in a 50/50 proportion in order to obtain blend A having the following characteristics : 4 ppm sulphur, 14 wt. % aromatics, 11.4 wt.% of mono aromatics, and a density of 0.806 g/cm³.

Blend A is then further hydrogenated to be dearomatised in presence of a nickel hydrogenating catalyst according to the process of the invention under a pressure of 130 bars, at a liquid hourly space velocity (LHSV) of 1 h⁻¹ and at temperature between 155 and 160 °C. Then the resulting hydrogenated desulphurized distillate is fractionated into different cuts, the main one showing the characteristics given in table 1 hereafter.

**Table 1**

| Characteristics | units | Methods | Example 1 |
|---|---|---|---|
| Density at 15°C | kg/m³ | ASTM D4052 | 808 |
| Saybolt colour | | ASTM D56 | >+30 |
| Flash point | °C | ASTM D93 | 115 |
| Sulphur content | ppm | ASTM D5453 | < 1 |
| Distillation IBP | °C | ASTM D86 | 252 |
| Distillation FBP | °C | ASTM D86 | 328 |
| Aromatics content | ppm | UV method | 85 |

These results show that the product prepared according to the process of the invention is free of sulphur and exhibits a very low aromatic content. Its properties make it very suitable for hydrocarbon fluid applications.

Figure 1 shows the variation of the mono aromatic content in the effluent after the hydrogenation step for both blend A and the commercial ultra-low sulphur diesel alone according to the example.

When the commercial ultra-low sulphur diesel alone is hydrogenated, the content of mono aromatic of the effluent at the start of hydrogenation is very high (about 100 ppm) and increases progressively up to about 160 ppm 50 hours after the start of the hydrogenation. In comparison, when the blend A is hydrogenated, the mono aromatics content in the effluent at the start of hydrogenation is only about 25 ppm. It remains stable and very low in the time. Indeed, it reaches only about 40 ppm 50 hours after the start of the hydrogenation.
These results indicate that:
1) at the start of the hydrogenation, the mono aromatics content for feed A is 4 times lower than that of the commercial ultra-low sulphur diesel alone (25 ppm for feed A versus 100 ppm for the commercial ultra-low sulphur diesel alone). This result is surprising since before hydrogenation, the mono aromatics content for feed A was only 2 times lower than that of the commercial ultra-low sulphur diesel alone. Indeed, the content of mono aromatics in the commercial ultra-low sulphur Diesel before hydrogenation was 28 wt. % and the content of mono aromatic contents in blend A before hydrogenation was 14 wt. %. The hydrogenation process is thus more efficient when applied to blend A than when applied to the commercial ultra-low sulphur diesel alone.
2) with the commercial ultra low sulphur diesel alone, in addition to the impossibility to obtain the desired characteristics of the hydrogenated desulphurized distillate with respect to the mono aromatics content, a strong catalyst deactivation is observed. The strong catalyst deactivation is indicated by the fact that the mono aromatic content reaches 150 ppm 50 hours after the start of hydrogenation. In contrast for blend A, the mono aromatic content remains stable at about 40 ppm 20-50 hours after the start of hydrogenation.

These results show the advantage of adding a hydrocarbon cut originating from a gas-to-liquid process to a feed selected from the group consisting of a hydrodeoxygenated hydrocarbon cut obtained from biomass, a gas condensate, a hydrocarbon cut of fossil origin and mixtures thereof.

## Claims

1. Use of a low-sulphur blended feed in a hydrogenation process for reducing the hydrogenation catalyst sensitivity to deactivation, wherein the low-sulphur blended feed contains less than 15 ppm of sulphur and comprises a mixture of:
i) a hydrocarbon cut originating from a gas-to-liquid process with
ii) at least one selected from the group consisting of a hydrodeoxygenated hydrocarbon cut obtained from biomass, a gas condensate, a hydrocarbon cut of fossil origin and mixtures thereof; and wherein
said hydrogenation process hydrogenates the low-sulphur blended feed into very low sulphur and very low aromatic hydrocarbon fluids containing less than 5 ppm of sulphur and less than 300 ppm of aromatics and having a boiling point in the range of from 100 to 400°C and a boiling range of no more than 80°C, and said process comprises the step of catalytically hydrogenating said feed at a temperature from 80 to 180°C and at a pressure from 50 to 160 bars.

2. Use according to claim 1, wherein the low sulphur blended feed contains 5 to 95 % wt. of a hydrocarbon cut originating from a gas-to-liquid process, preferably 20 to 80 % wt. and more preferably 40 to 60 % wt.

3. Use according to any one of claims 1 and 2, wherein the low-sulphur blended feed contains less than 70% aromatics, preferably less than 50% and more preferably less than 30%.

4. Use according to any one of claims 1 to 3, wherein the low-sulphur blended feed contains less than 8ppm sulphur and more preferably less than 5ppm.

5. Use according to any one of claims 1 to 4, wherein the very low sulphur and very low aromatic hydrocarbon fluids have a boiling point in the range 150 to 400°C, preferably from 200 to 400°C.

6. Use according to any one of claims 1 to 5, wherein the very low sulphur and very low aromatic hydrocarbon fluids have a boiling range below 80 °C, preferably between 40 and 50°C.

7. Use according to any one of claims 1 to 6, wherein the very low sulphur and very low aromatic hydrocarbon fluids contain less than 100ppm aromatics, and more preferably less than 50ppm.

8. Use according to any one of claims 1 to 7, wherein the very low sulphur and very low aromatic hydrocarbon fluids have a sulphur content of less than 3ppm, most preferably less than 0.5ppm.

9. Use according to any one of claims 1 to 8, wherein the process comprises three hydrogenation stages, preferably in three separate reactors.

10. Use according to any one of claims 1 to 9, wherein the process comprises a step of prefractionation of the low-sulphur blended feed prior to hydrogenation, into fractions having a boiling point in the range of 150 to 250°C or in the range of 220 to 330°C.

11. Use according to any one of claims 1 to 10, wherein the process comprises a step of fractionation of the very low sulphur and very low aromatic hydrocarbon fluids into fluids of defined boiling ranges.

12. Use according to any one of claims 1 to 10, wherein the very low sulphur and very low aromatic hydrocarbon fluids thus produced have:
- a naphthenic content below 60%wt, especially below 50% and even below 40%, and/or
- a polynaphthenic content below 30%wt, especially below 25% and even below 20%, and/or
- a paraffinic content above 40%wt, especially above 60% and even above 70%, and/or
- an isoparaffinic content above 20%wt, especially above 30%, and even above 40%.

## Patentansprüche

1. Verwendung eines gemischten Ausgangsstoffes mit geringem Schwefelgehalt in einem Hydrierungsverfahren zur Verringerung der Empfindlichkeit des Hydrierungskatalysators gegenüber Deaktivierung, wobei der gemischte Ausgangsstoff mit geringem Schwefelgehalt weniger als 15 ppm Schwefel enthält, und eine Mischung Folgendes umfasst:
i) eine Kohlenwasserstofffraktion, die aus einem Gas-to-Liquid-Verfahren stammt, mit
ii) mindestens einem, ausgewählt aus der Gruppe bestehend aus einer hydrodeoxygenierten Kohlenwasserstofffraktion aus Biomasse, einem Gaskondensat, einer Kohlenwasserstofffraktion fossilen Ursprungs und Mischungen davon;
und wobei
- das Hydrierungsverfahren den gemischten Ausgangsstoff mit geringem Schwefelgehalt zu Kohlenwasserstoffflüssigkeiten mit sehr geringem Schwefel- und Aromatengehalt hydriert, die weniger als 5 ppm Schwefel und weniger als 300 ppm Aromaten enthalten, und die einen Siedepunkt im Bereich von 100 bis 400 °C aufweisen, und einen Siedebereich von nicht mehr als 80 °C, und wobei das Verfahren den Schritt der katalytischen Hydrierung des Ausgangsstoffes bei einer Temperatur von 80 bis 180 °C und bei einem Druck von 50 bis 160 Bar umfasst.

2. Verwendung nach Anspruch 1, wobei der gemischte Ausgangsstoff mit geringem Schwefelgehalt 5 bis 95 Gew.-% einer Kohlenwasserstofffraktion enthält, die aus einem Gas-to-Liquid-Verfahren stammt, vorzugsweise von 20 bis 80 Gew.-% und bevorzugter von 40 bis 60 Gew.-%.

3. Verwendung nach einem der Ansprüche 1 und 2, wobei der gemischte Ausgangsstoff mit geringem Schwefelgehalt weniger als 70 % Aromaten enthält, vorzugsweise weniger als 50 % und bevorzugter weniger als 30 %.

4. Verwendung nach einem der Ansprüche 1 bis 3, wobei der gemischte Ausgangsstoff mit geringem Schwefelgehalt weniger als 8 ppm Schwefel enthält und bevorzugter weniger als 5 ppm.

5. Verwendung nach einem der Ansprüche 1 bis 4, wobei die Kohlenwasserstoffflüssigkeiten mit sehr geringem Schwefel- und Aromatengehalt einen Siedepunkt im Bereich von 150 bis 400 °C, vorzugsweise von 200 bis 400 °C aufweisen.

6. Verwendung nach einem der Ansprüche 1 bis 5, wobei die Kohlenwasserstoffflüssigkeiten mit sehr geringem Schwefel- und Aromatengehalt einen Siedebereich von unter 80 °C, vorzugsweise zwischen 40 und 50 °C aufweisen.

7. Verwendung nach einem der Ansprüche 1 bis 6, wobei die Kohlenwasserstoffflüssigkeiten mit sehr geringem Schwefel- und Aromatengehalt weniger als 100 ppm Aromaten und bevorzugter weniger als 50 ppm enthalten.

8. Verwendung nach einem der Ansprüche 1 bis 7, wobei die Kohlenwasserstoffflüssigkeiten mit sehr geringem Schwefel- und Aromatengehalt einen Schwefelgehalt von weniger als 3 ppm, besonders bevorzugt von weniger als 0,5 ppm aufweisen.

9. Verwendung nach einem der Ansprüche 1 bis 8, wobei das Verfahren drei Hydrierungsstufen umfasst, vorzugsweise in drei separaten Reaktoren.

10. Verwendung nach einem der Ansprüche 1 bis 9, wobei das Verfahren einen Schritt der Vorfraktionierung des gemischten Ausgangsstoffs mit geringem Schwefelgehalt in Fraktionen, die einen Siedepunkt im Bereich von 150 bis 250 °C oder im Bereich von 220 bis 330 °C aufweisen, vor der Hydrierung umfasst.

11. Verwendung nach einem der Ansprüche 1 bis 10, wobei das Verfahren einen Schritt der Fraktionierung der Kohlenwasserstoffflüssigkeiten mit sehr geringem Schwefel- und Aromatengehalt in Flüssigkeiten mit definierten Siedebereichen umfasst.

12. Verwendung nach einem der Ansprüche 1 bis 10, wobei die Kohlenwasserstoffflüssigkeiten mit sehr geringem Schwefel- und Aromatengehalt, die somit hergestellt wurden, Folgendes aufweisen:
- einen Naphthengehalt von weniger als 60 Gew.-%, insbesondere weniger als 50 Gew.-% und sogar weniger als 40 Gew.-%, und/oder
- einen Polynaphthengehalt von weniger als 30 Gew.-%, insbesondere weniger als 25 Gew.-% und sogar weniger als 20 Gew.-%, und/oder
- einen Paraffingehalt von mehr als 40 Gew.-%, insbesondere mehr als 60 Gew.-% und sogar mehr als 70 Gew.-%, und/oder
- einen Isoparaffingehalt von mehr als 20 Gew.-%, insbesondere mehr als 30 Gew.-% und sogar mehr als 40 Gew.-%.

## Revendications

1. Utilisation d'une charge mixte à basse teneur en soufre dans un procédé d'hydrogénation pour réduire la sensibilité d'un catalyseur d'hydrogénation à la désactivation, dans laquelle la charge mixte à basse teneur en soufre contient moins de 15 ppm de soufre et comprend un mélange :
i) d'une coupe d'hydrocarbures issue d'un procédé de transformation gaz-en-liquides et
ii) d'au moins un des composés sélectionnés dans le groupe consistant en une coupe d'hydrocarbures hydrodésoxygénés obtenue à partir d'une biomasse, d'un gaz à condensat, d'une coupe d'hydrocarbures d'origine fossile et des mélanges de ceux-ci ;
et dans laquelle ledit procédé d'hydrogénation produit l'hydrogénation de la charge mixte à faible teneur en soufre en des fluides hydrocarbonés à très basse teneur en soufre et très basse teneur en aromatiques, contenant moins de 5 ppm de soufre et moins de 300 ppm d'aromatiques, dont le point d'ébullition est dans la plage qui va de 100 à 400 °C et dont le domaine d'ébullition ne dépasse pas 80 °C, ledit procédé comprenant l'étape d'hydrogénation catalytique de ladite charge à une température qui va de 80 à 180 °C et à une pression qui va de 50 à 160 bars.

2. Utilisation selon la revendication 1, dans laquelle la charge mixte à basse teneur en soufre contient de 5 à 95 % en poids d'une coupe d'hydrocarbures issue d'un processus de transformation gaz-en-liquides, préférablement de 20 à 80 % en poids et plus préférablement de 40 à 60 % en poids.

3. Utilisation selon l'une quelconque des revendications 1 et 2, dans laquelle la charge mixte à basse teneur en soufre contient moins de 70 % d'aromatiques, préférablement moins de 50 % et plus préférablement moins de 30 %.

4. Utilisation selon l'une quelconque des revendications 1 à 3, dans laquelle la charge mixte à basse teneur en soufre contient moins de 8 ppm de soufre et plus préférablement moins de 5 ppm.

5. Utilisation selon l'une quelconque des revendications 1 à 4, dans laquelle les fluides hydrocarbonés à très basse teneur en soufre et très basse teneur en aromatiques ont un point d'ébullition dans la plage qui va de 150 à 400 °C, préférablement de 200 à 400 °C.

6. Utilisation selon l'une quelconque des revendications 1 à 5, dans laquelle, les fluides hydrocarbonés à très basse teneur en soufre et très basse teneur en aromatiques ont un domaine d'ébullition inférieur à 80 °C et préférablement entre 40 et 50 °C.

7. Utilisation selon l'une quelconque des revendications 1 à 6, dans laquelle les fluides hydrocarbonés à très basse teneur en soufre et très basse teneur en aromatiques contiennent moins de 100 ppm d'aromatiques et plus préférablement moins de 50 ppm.

8. Utilisation selon l'une quelconque des revendications 1 à 7, dans laquelle les fluides hydrocarbonés à très basse teneur en soufre et très basse teneur en aromatiques ont une teneur en soufre inférieure à 3 ppm et plus préférablement inférieure à 0,5 ppm.

9. Utilisation selon l'une quelconque des revendications 1 à 8, dans laquelle le procédé comprend trois stades d'hydrogénation, préférablement réalisées dans trois réacteurs séparés.

10. Utilisation selon l'une quelconque des revendications 1 à 9, dans laquelle le procédé comprend une étape de préfractionnement de la charge mixte à teneur basse en soufre avant hydrogénation en des fractions dont le point d'ébullition est dans la plage qui va de 150 à 250 °C ou de 220 à 330 °C.

11. Utilisation selon l'une quelconque des revendications 1 à 10, dans laquelle le procédé comprend également une étape de fractionnement des fluides hydrocarbonés à très basse teneur en soufre et très basse teneur en aromatiques en des fluides dont les domaines d'ébullition sont définis.

12. Utilisation selon l'une quelconque des revendications 1 à 10, dans laquelle les fluides hydrocarbonés à très basse teneur en soufre et très basse teneur en aromatiques ainsi produits ont :
- une teneur en naphtènes inférieure à 60 % en poids, en particulier inférieure à 50 % voire inférieure à 40 % et/ou
- une teneur en polynaphtènes inférieure à 30 % en poids, en particulier inférieure à 25 % voire inférieure à 20 % et/ou
- une teneur en paraffines supérieure à 40 % en poids, en particulier supérieure à 60 % voire supérieure à 70 % et/ou
- une teneur en isoparaffines supérieure à 20 % en poids, en particulier supérieure à 30 % voire supérieure à 40 %.
